# EUROPEAN PATENT SPECIFICATION

(11) **EP 4 317 992 B1**
(45) Date of publication and mention of the grant of the patent: **09.07.2025**
(21) Application number: 22883993.2
(22) Date of filing: 18.10.2022
(51) Int. Cl.: G01P 15/08, G01L 5/00, H01M 10/42, H01M 10/48

(54) **IMPACT MEASUREMENT METHOD OF BATTERY AND BATTERY SYSTEM ADOPTING SAME**
BATTERIEAUFPRALLMESSVERFAHREN UND BATTERIESYSTEM MIT ANWENDUNG DES VERFAHRENS
PROCÉDÉ DE MESURE D'IMPACT DE BATTERIE ET SYSTÈME DE BATTERIE AUQUEL LEDIT PROCÉDÉ EST APPLIQUÉ

(30) Priority: 22.10.2021 KR 20210141486
(43) Date of publication of application: 07.02.2024
(73) Proprietor: LG ENERGY SOLUTION, LTD., Seoul 07335 (KR)
(72) Inventor: LEE, Seokjin, Daejeon 34122 (KR); KIM, Dong Hyun, Daejeon 34122 (KR)
(74) Representative: Plasseraud IP
(86) International application number: PCT/KR2022/015887
(87) International publication number: WO 2023/068771

(56) References cited:
- WO-A1-2020/120780
- KR-A- 20130 051 870
- KR-A- 20130 061 964
- KR-A- 20180 048 098
- KR-A- 20180 073 764
- KR-A- 20190 108 379
- US-A1- 2008 297 116
- US-A1- 2021 140 815

## Description

### [Technical Field]

### CROSS-REFERENCE TO RELATED APPLICATION(S)

This application claims priority to and the benefit of Korean Patent Application No. 10-2021-0141486 filed in the Korean Intellectual Property Office on October 22, 2021.

The present invention relates to an impact measurement method of a battery and a battery system adopting the same.

### [Background Art]

The performance of a battery can be lowered depending on an external impact. A battery system can include an acceleration sensor in order to measure the external impact of the battery. The battery system can measure the external impact by utilizing a signal received from the acceleration sensor and utilize the measured external impact for battery state analysis.

However, even when an operation mode of the batter system is a low-power state of the battery such as a sleep mode, power consumption is generated by measurement of the external impact using the acceleration sensor. This can cause excessive discharging of the battery. The US 2008/297116 A1 discloses a method for measuring an impact for a battery, the method comprising: a microprocessor unit (MPU) operable in a sleep mode and a normal mode; when the MPU is in the sleep mode and the impact sensor transmits an impact signal the sleep mode is immediately released and the MPU transitions to the normal mode to read out the impact signal and to store impact information in a memory.

### [Disclosure]

### [Technical Problem]

The present invention has been made in an effort to provide an impact measurement method which can reduce power consumption by counting an external impact applied to a battery according to an operation mode of a battery system in a battery system including an acceleration sensor.

### [Technical Solution]

The present invention provides a method for measuring an impact for a battery, which includes: storing, by a main control unit (MCU), a previous operation mode of a battery system in a first area of a memory; storing, by the MCU, a current operation mode of the battery system in a second area of the memory; determining, by the MCU, whether the previous operation mode stored in the first area and the current operation mode stored in the second area are the same as each other; storing, by the MCU, a change flag in a third area of the memory as a first value when the previous operation mode stored in the first area and the current operation mode stored in the second area are determined to be different from each other; receiving, by the MCU, an acceleration sensor signal from an acceleration sensor when the current operation mode stored in the second area is a sleep mode and the change flag is the first value; and receiving, by the MCU, the acceleration sensor signal from the acceleration sensor when the current operation mode stored in the second area is not the sleep mode.

The method may further include: determining, by the MCU, whether an acceleration value indicated by the acceleration sensor signal exceeds a reference value; and adding, by the MCU, 1 to an impact count stored in a fourth area of the memory when the acceleration value is determined to exceed the reference value.

The method may further include: setting, by the MCU, the change flag stored in the third area to a second value and storing the second value in the third area when the acceleration value is determined to be equal to or less than the reference value; and storing, by the MCU, the current operation mode stored in the second area in the first area of the memory.

The method may further include: determining, by the MCU, whether the impact count reaches a predetermined impact threshold; and performing, by the MCU, a protection operation for an impact when the impact count is determined to have reached the predetermined impact threshold.

The method may further include: setting, by the MCU, the change flag stored in the third area to a second value, and storing the second value in the third area when the impact count is determined to have not reached the predetermined impact threshold; and storing, by the MCU, the current operation mode stored in the second area in the first area.

The present invention provides a battery system for measuring an impact for a battery, which includes: an acceleration sensor configured to generate an acceleration sensor signal by measuring an acceleration of the battery system; and a main control unit (MCU) configured to perform: pre-storing an operation mode of the battery system in a first area of a memory, storing a current operation mode in a second area of the memory, and as a result of comparing the operation mode stored in the first area and the current operation mode stored in the second area, storing a change flag in a third area of the memory as a first value when the operation mode and the current operation mode are different from each other, and receiving the acceleration sensor signal from the acceleration sensor when the current operation mode stored in the second area is a sleep mode, and the change flag stored in the third area is the first value or the current operation mode stored in the second area is not the sleep mode.

The MCU may further include the memory including the first area, the second area, the third area, and a fourth area, and the MCU may store an impact count in the fourth area indicating the number of times at which an acceleration value indicated by the acceleration sensor signal exceeds a reference value.

The MCU may add 1 to the impact count when the acceleration value indicated by the received acceleration sensor signal exceeds the reference value, and set the change flag stored in the third area to a second value and store the second value in the third area, and store the current operation mode stored in the second area in the first area when the acceleration value indicated by the received acceleration sensor signal is equal to or less than the reference value.

The MCU may determine whether the impact count reaches a predetermined impact threshold, and perform a protection operation for an impact when the impact count reaches the predetermined impact threshold.

The MCU may set the change flag stored in the third area to a second value and store the second value in the third area when the impact count does not reach a predetermined impact threshold, and store the current operation mode stored in the second area in the first area of the memory.

### [Advantageous Effects]

Impact measurement is enabled, which can reduce power consumption by counting an external impact applied to a battery according to an operation mode of a battery system in a battery system including an acceleration sensor.

### [Description of the Drawings]

FIG. 1 is a diagram illustrating a battery system according to an exemplary embodiment.
FIG. 2 is a flowchart illustrating an impact measurement method of a battery according to an exemplary embodiment.
FIG. 3 is a diagram schematically illustrating a memory included in an MCU.
FIG. 4 is a diagram schematically illustrating a process of changing a value stored in the memory included in the MCU over time in an exemplary embodiment.

### [Mode for Invention]

Hereinafter, exemplary embodiments disclosed in this specification will be described in detail with reference to the accompanying drawings and the same or similar components are denoted by the same or similar reference numerals, and duplicated description thereof will be omitted. Suffixes "module" and/or "unit" for components used in the following description are given or mixed in consideration of easy preparation of the present disclosure only and do not have their own distinguished meanings or roles. Further, in describing an embodiment disclosed in the present invention, a detailed description of related known technologies will be omitted if it is determined that the detailed description makes the gist of the embodiment of the present invention unclear. Further, it is to be understood that the accompanying drawings are just used for easily understanding the embodiments disclosed in this specification and a technical spirit disclosed in this specification is not limited by the accompanying drawings.

Terms including an ordinary number, such as first and second, are used for describing various elements, but the elements are not limited by the terms. The terms are used only to discriminate one element from another element.

In the present application, it should be understood that term "include" or "have"indicates that a feature, a number, a step, an operation, a component, a part or the combination thereof described in the specification is present, but does not exclude a possibility of presence or addition of one or more other features, numbers, steps, operations, components, parts or combinations thereof, in advance.

In a component controlling other components under a specific control condition among components according to an exemplary embodiment, a program implemented by a set of commands materializing a control algorithm required for controlling other components may be installed. The control component may process input data and stored data according to the installed program and generate output data. The control component may include a non-volatile memory storing the program and a memory storing the data.

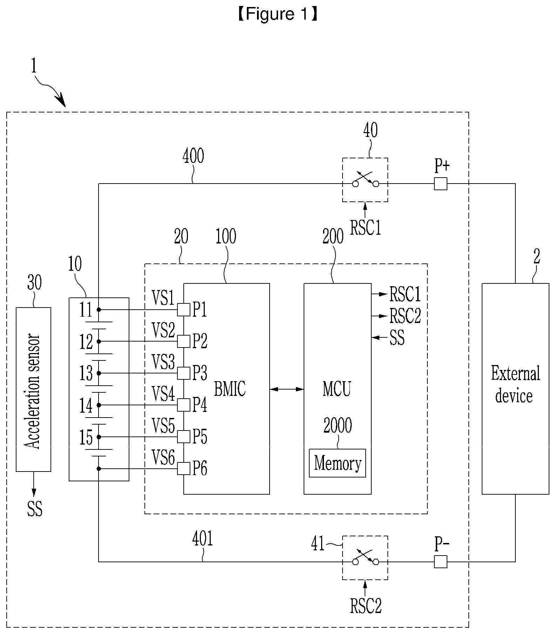

Hereinafter, referring to FIGS. 1 to 4, a method for measuring an impact applied to a battery system by utilizing an acceleration sensor and a battery system adopting the same according to an exemplary embodiment will be described. The method for measuring the impact applied to the battery system may be implemented by software installed in a battery management system or a program including combination of the software. The corresponding program may be stored in a storage medium of the battery management system. The storage medium may be implemented by various types of memories including a high-speed random access memory, a flash memory device, a non-volatile memory such as a non-volatile solid-state memory device, etc.

FIG. 1 is a diagram illustrating a battery system according to an exemplary embodiment.

The battery system 1 includes a battery pack 10, a battery management system 20, an acceleration sensor 30, and relays 40 and 41. Hereinafter, the battery management system 20 will be referred to as a battery management system (BMS). It is illustrated that the number of battery packs 10 is 1 in FIG. 1, but the present invention is not limited thereto and the battery system 1 may include two or more battery packs.

An external device 2 may include a load and charging device such as an inverter, a converter, etc. When the external device 2 is a charger, both ends of the battery system 1 are connected to the charger and receive power from the charger to be charged. When the external device 2 is a load, both ends of the battery system 1 are connected to the load and the power supplied by the battery pack 10 may be discharged through the load.

A wire 400 is connected between a positive electrode and one end (P+) of the battery pack 10, and a wire 401 is connected between a negative electrode and the other end (P-) of the battery pack 10. The relays 40 and 41 are positioned on the wires 400 and 401 to electrically control a current path upon charging and discharging of the battery pack 10. Closing and opening of the relays 40 and 41 are controlled according to relay control signals RSC1 and RSC2 supplied from an MCU 200.

The battery pack 10 includes a plurality of battery cells 11 to 15. It is illustrated in FIG. 1 that the number of plurality of battery cells 11 to 15 is 5, but the present invention is not limited thereto, and the battery pack 10 may be implemented by two or more battery cells connected in series, a plurality of battery cells in which two or more battery cells connected in parallel are connected in plural in series, or two or more battery cells connected in parallel.

The BMS 20 includes a battery monitoring integrated circuit 100 and a main control unit 200. Hereinafter, the battery monitoring integrated circuit will be referred to as a battery monitoring integrated circuit (BMIC). Hereinafter, the main control unit will be referred to as a main control unit (MCU).

The acceleration sensor 30 is provided in the battery system 1. The acceleration sensor 30 measures and generates an acceleration or a deceleration, and a generated acceleration sensor signal SS is transmitted to the MCU 200.

The BMIC 100 is connected to each of the plurality of battery cells 11 to 15, and a plurality of voltage measurement signals VS1 to VS6 measured from both ends of the plurality of battery cells 11 to 15 are acquired through a plurality of input terminals P1 to P6. The BMIC 100 may derive cell voltage of each of the plurality of battery cells 11 to 15 from the plurality of voltage measurement signals VS1 to VS6. When the BMIC 100 receives a request signal from the MCU 200, the BMIC 10 may transmit a signal indicating the plurality of cell voltages to the MCU 200. The request signal may include a request for cell voltages, cell temperatures, etc., of the plurality of battery cells 11 to 15.

The MCU 200 may control an operation of measuring the impact applied to the battery system 1 based on the operation mode of the battery system 1 and the acceleration sensor signal SS received from the acceleration sensor 30. The MCU 200 may include a memory 2000 storing a previous operation mode and a current operation mode of the battery system 1, a flag indicating whether the operation mode is changed, and an impact count. Hereinafter, the flag indicating whether the operation mode is changed will be referred to as a change flag.

The operation mode of the battery system 1 may be at least divided into any one of a sleep mode and an on mode. In the sleep mode, the relays 40 and 41 are opened, and the BMIC 100 is in an off state, and the MCU 200 is in the off state. In the on mode, the relays 40 and 41 are closed, and the BMIC 100 is in the on state, and the MCU 200 is in the on state.

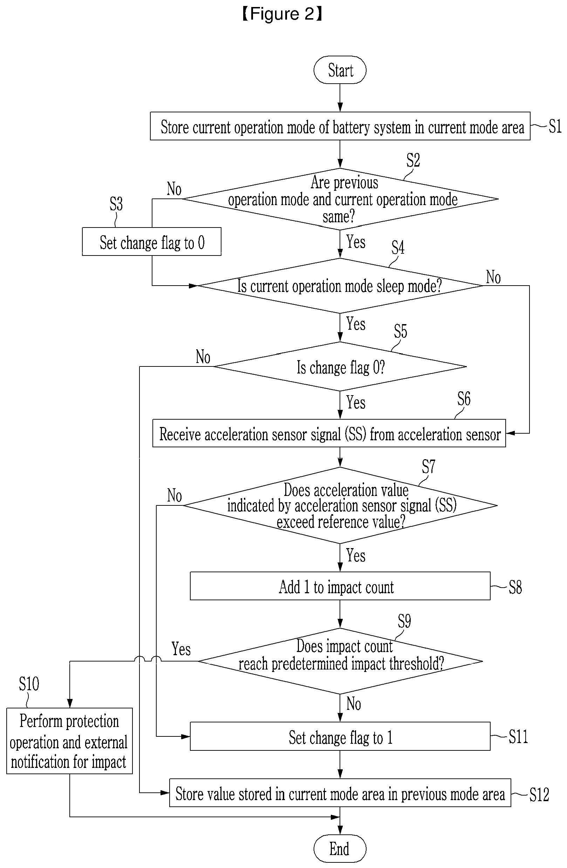

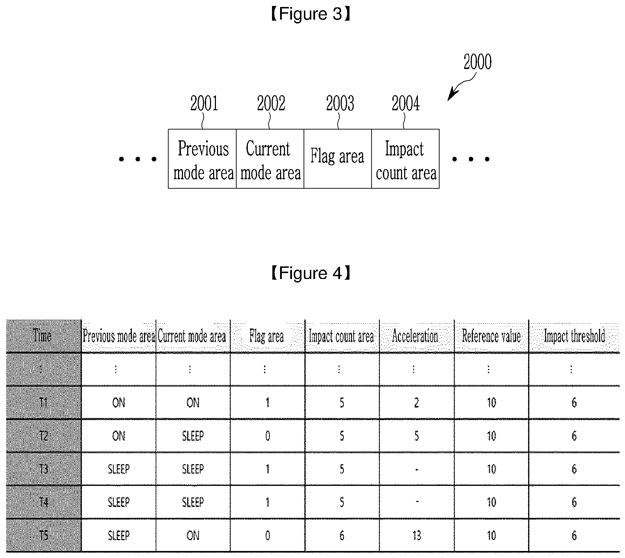

Hereinafter, referring to FIGS. 2 and 3, a method in which the MCU 200 measures the impact of the battery pack based on the operation mode of the battery system 1 and the acceleration sensor signal SS received from the acceleration sensor will be described.

FIG. 2 is a flowchart illustrating an impact measurement method of a battery according to an exemplary embodiment.

A previous mode area 2001 of the memory 2000 may pre-store a parameter indicating the previous operation mode of the battery system 1. The previous operation mode as the operation mode of the battery system 1 prestored in the previous mode area 2001 may be at least the sleep mode or the on mode. The previous operation mode may be an operation mode of the battery system 1 last stored in the current mode area 2002 before a time when step S1 is performed.

FIG. 3 is a diagram schematically illustrating a memory included in an MCU.

The memory 2000 may include the previous mode area 2001, the current mode area 2002, a flag area 2003, and an impact count area 2004.

The operation mode of the battery system 1 is stored in the previous mode area 2001 and the current mode area 2002. The change flag may be stored in the flag area 2003, and the change flag may be a variable indicating whether the operation mode of the battery system 1 is changed. The impact count may be stored in the impact count area 2004, and the impact count may be a variable indicating the number of impact times of a predetermined reference value or more recognized to be applied to the battery system 1.

The MCU 200 may store the current operation mode of the battery system 1 in the current mode area 2002 (S1). The current operation mode as an operation mode of the battery system 1 at a specific time for storing data in the current mode area 2002 may be at least the sleep mode or the on mode the MCU 200.

The MCU 200 compares the operation mode stored in the previous mode area 2001 and the operation mode stored in the current mode area 2002 with each other (S2).

When the operation mode stored in the previous mode area 2001 and the operation mode stored in the current mode area 2002 are different from each other, the MCU 200 sets the change flag stored in the flag area 2003 to 0 (S3). For example, when the current operation mode is different from the previous operation mode, the change flag is 0 and when the current operation mode is the same as the previous operation mode, the change flag is 1.

Subsequently to step S3, or in a determination result of step S2, when the operation mode stored in the previous mode area 2001 and the operation mode stored in the current mode area 2002 are the same as each other, the MCU 200 determines whether the operation mode stored in the current mode area 2002 is the sleep mode (S4).

When the operation mode stored in the current mode area 2002 is the sleep mode in the determination result of step S4, the MCU 200 determines whether the change flag stored in the flag area 2003 is 0 (S5).

When the operation mode stored in the current mode area 2002 is not the sleep mode in the determination result of step S4 or when the change flag stored in the flag area 2003 is 0 in the determination result of step S5, the MCU 200 receives the acceleration sensor signal SS from the acceleration sensor 30 (S6). The acceleration sensor signal SS received by the MCU 200 may include a signal indicating an acceleration value measured by the acceleration sensor 30. When the operation mode of the battery system 1 is the sleep mode, the MCU 200 receives the acceleration sensor signal SS to determine whether the impact is applied to the battery system 1 only when the change flag indicates 0.

When the operation mode of the battery system 1 is the sleep mode, if the MCU 200 periodically receives the acceleration sensor signal similarly to the case where the operation mode is the on mode, the power consumption of the battery pack 10 may excessively increase in the sleep mode. Therefore, in order to prevent excessive power consumption of the battery pack 10, the MCU 200 may differentiate whether to receive the acceleration sensor signal SS according to the operation mode of the battery system 1.

Subsequently to step S6, the MCU 200 determines whether the acceleration value indicated by the acceleration sensor signal SS exceeds a reference value (S7). Here, the reference value may be preset in the MCU 200 as initial information. The MCU 200 may recognize that the impact is not applied to the battery system 1 when the acceleration value is equal to or less than the reference value.

When the acceleration value indicated by the acceleration sensor signal SS exceeds a reference value, the MCU 200 adds 1 to the impact count stored in the impact count area 2004 (S8). The MCU 200 may recognize the acceleration value exceeding the reference value as the impact being applied to the battery pack 10.

Subsequently to step S8, the MCU 200 determines whether the impact count reaches a predetermined impact threshold (S9). Here, the impact threshold may be preset in the MCU 200 as the initial information.

In the determination result of step S9, when the impact count is equal to the impact threshold, the MCU 200 may perform a protection operation and an external notification for the impact (S10).

When the acceleration value indicated by the acceleration sensor signal SS is equal to or less than the reference value in the determination result of step S7 or when the impact count does not reach the predetermined impact threshold in the determination result of step S9, the MCU 200 sets the change flag stored in the flag area 2003 to 1 (S11). When the change flag is kept to 0, the MCU 200 may determine that the operation mode is changed, so the change flag may be initialized to 1.

When the change flag is not 0 in the determination result of step S5 or subsequently to step S11, the MCU 200 stores the operation mode stored in the current mode area 2002 in the previous mode area 2001 (S12).

Hereinafter, referring to FIG. 4, an exemplary embodiment may be described with an example for values stored in the memory 2000 according to a time order.

FIG. 4 is a diagram schematically illustrating a process of changing a value stored in the memory included in the MCU over time in an exemplary embodiment.

In a table illustrated in FIG. 4, the time order is illustrated in a column including a time. The operation mode stored in the previous mode area 2001 is illustrated in the column including the previous mode area, the operation mode stored in the current mode area 2002 is illustrated in the column including the current mode area, the change flag stored in the flag area 2003 is illustrated in the column including the flag area, and the impact count stored in the impact count area 2004 is illustrated in the column including the impact count area.

In the table illustrated in FIG. 4, the acceleration value indicated the acceleration sensor signal SS which the MCU 200 receives from the acceleration sensor 30 is illustrated in the column including the acceleration. The reference value which becomes a comparison target of the acceleration value is illustrated in the column including the reference value. Here, it is assumed that the acceleration value and the reference value have the same unit as each other. The impact threshold which becomes the comparison target of the impact count value is illustrated in the column including the impact threshold.

Time T1 to time T5 sequentially represent a specific time zone in which the impact measurement method according to an exemplary embodiment is performed. Hereinafter, each step of FIG. 2 may be described based on each time zone from time T2 after time T1.

At time T2, the current operation mode stored in the current mode area 2002 is the sleep mode (S1). The previous operation mode stored in the previous mode area 2001 of time T2 is the on mode similarly to the operation mode stored in the current mode area 2002 of time T1. When the on mode which is the operation mode stored in the previous mode area 2001 of time T2 and the sleep mode which is the operation mode stored in the current mode area 2002 are not the same as each other (S2), the MCU 200 sets the change flag to 0 (S3). Further, when the operation mode stored in the current mode area 2002 is the sleep mode (S4) and the change flag stored in the flag area 2003 is 0 (S5), the acceleration sensor signal SS is received from the acceleration sensor 30 (S6). When an acceleration of 5 which is the acceleration value indicated by the acceleration sensor signal SS is equal to or less than an acceleration of 10 which is the reference value, the MCU 200 does not increase the impact count stored in the impact count area 2004. Thereafter, the change flag is set to 1 (S11). In this case, at time T3 after the time when the change flag changes from 0 to 1, the MCU 200 stores the sleep mode which is the operation mode stored in the current mode area 2002 at time T2 in the previous mode area 2001 (S12).

At time T3, the current operation mode stored in the current mode area 2002 is the sleep mode (S1). Since the sleep mode which is the operation mode stored in the previous mode area 2001 of time T3 is the same as the sleep mode which is the operation mode stored in the current mode area 2002 (S2), the operation mode stored in the current mode area 2002 is the sleep mode (S4), and the change flag stored in the flag area 2003 is not 0 (S5), the MCU 200 stores the sleep mode which the operation mode stored in the current mode area 2002 at time T3 in the previous mode area 2001 at time T4 (S12).

At time T4, the current operation mode stored in the current mode area 2002 is the sleep mode (S1). Since the sleep mode which is the operation mode stored in the previous mode area 2001 of time T4 is the same as the sleep mode which is the operation mode stored in the current mode area 2002 (S2), the operation mode stored in the current mode area 2002 is the sleep mode (S4), and the change flag stored in the flag area 2003 is not 0 (S5), the MCU 200 stores the sleep mode which is the operation mode stored in the current mode area 2002 at time T4 in the previous mode area 2001 at time T5 (S12).

At time T5, the current operation mode stored in the current mode area 2002 is the on mode (S1). When the sleep mode which is the operation mode stored in the previous mode area 2001 of time T5 and the ON mode which is the operation mode stored in the current mode area 2002 are not the same as each other (S2), the MCU 200 sets the change flag to 0 (S3). Further, since the operation mode stored in the current mode area 2002 is not the sleep mode (S4), the acceleration sensor signal SS is received from the acceleration sensor 30 (S6). When an acceleration of 13 which is the acceleration value indicated by the acceleration sensor signal SS exceeds an acceleration of 10 which is the reference value, the MCU 200 increases the impact count stored in the impact count area 2004 from 5 which is the conventional impact count to 6 (S8). Since the increased impact count reaches 6 which is the impact threshold, the MCU 200 performs the protection operation and the external notification for the impact (S10).

While this invention has been described in connection with what is presently considered to be practical example embodiments, it is to be understood that the invention is not limited to the disclosed embodiments, but, on the contrary, is intended to cover various modifications within the scope of the appended claims.

## Claims

1. A method for measuring an impact for a battery, the method comprising:
storing (S1), by a main control unit, MCU, (200), a previous operation mode of a battery system (1) in a first area (2001) of a memory (2000);
storing, by the MCU, a current operation mode of the battery system (1) in a second area (2002) of the memory (2000);
determining (S2), by the MCU, whether the previous operation mode stored in the first area (2001) and the current operation mode stored in the second area (2002) are the same as each other;
storing, by the MCU, a change flag in a third area (2003) of the memory (2000) as a first value when the previous operation mode stored in the first area (2001) and the current operation mode stored in the second area (2002) are determined to be different from each other;
receiving, by the MCU, an acceleration sensor signal from an acceleration sensor (30) when the current operation mode stored in the second area (2002) is a sleep mode and the change flag is the first value; and
receiving (S6), by the MCU, the acceleration sensor signal from the acceleration sensor (30) when the current operation mode stored in the second area (2002) is not the sleep mode.

2. The method of claim 1, further comprising:
Determining (S7), by the MCU, whether an acceleration value indicated by the acceleration sensor signal exceeds a reference value; and
Adding (S8), by the MCU, 1 to an impact count stored in a fourth area (2004) of the memory (2000) when the acceleration value is determined to exceed the reference value.

3. The method of claim 1, further comprising:
Determining (S7), by the MCU, whether the acceleration value indicated by the acceleration sensor signal exceeds the reference value;
setting, by the MCU, the change flag stored in the third area (2003) to a second value and storing the second value in the third area (2003) when the acceleration value is determined to be equal to or less than the reference value; and
storing, by the MCU, the current operation mode stored in the second area (2002) in the first area (2001) of the memory (2000).

4. The method of claim 2, further comprising:
Determining (S9), by the MCU, whether the impact count reaches a predetermined impact threshold; and
Performing (S10), by the MCU, a protection operation for an impact when the impact count is determined to have reached the predetermined impact threshold.

5. The method of claim 4, further comprising:
setting, by the MCU, the change flag stored in the third area (2003) to a second value, and storing the second value in the third area (2003) when the impact count is determined to not have reached the predetermined impact threshold; and
storing, by the MCU, the current operation mode stored in the second area (2002) in the first area (2001).

6. A battery system (1) for measuring an impact for a battery, the battery system (1) comprising:
an acceleration sensor (30) configured to generate an acceleration sensor signal by measuring an acceleration of the battery system (1); and
a main control unit, MCU, (200) which performs:
pre-storing an operation mode of a battery system (1) in a first area (2001) of a memory (2000);
storing a current operation mode in a second area (2002) of the memory (2000), and as a result of comparing the operation mode stored in the first area (2001) and the current operation mode stored in the second area (2002), storing a change flag in a third area (2003) of the memory (2000) as a first value when the operation mode and the current operation mode are different from each other; and
receiving the acceleration sensor signal from the acceleration sensor (30) when the current operation mode stored in the second area (2002) is a sleep mode, and the change flag stored in the third area (2003) is the first value or the current operation mode stored in the second area (2002) is not the sleep mode.

7. The battery system of claim 6, wherein the MCU includes the memory (2000) including the first area (2001), the second area (2002), the third area (2003), and a fourth area (2004), and
wherein the MCU stores an impact count in the fourth area (2004) indicating a number of times at which an acceleration value indicated by the acceleration sensor signal exceeds a reference value.

8. The battery system of claim 7, wherein the MCU:
adds 1 to the impact count when the acceleration value indicated by the received acceleration sensor signal exceeds the reference value, and sets the change flag stored in the third area (2003) to a second value and stores the second value in the third area (2003); and
stores the current operation mode stored in the second area (2002) in the first area (2001) when the acceleration value indicated by the received acceleration sensor signal is equal to or less than the reference value.

9. The battery system of claim 7, wherein the MCU:
determines whether the impact count reaches a predetermined impact threshold; and
performs a protection operation for an impact when the impact count reaches the predetermined impact threshold.

10. The battery system of claim 7, wherein the MCU:
sets the change flag stored in the third area (2003) to a second value and stores the second value in the third area (2003) when the impact count does not reach a predetermined impact threshold; and
stores the current operation mode stored in the second area (2002) in the first area (2001) of the memory (2000).

## Patentansprüche

1. Verfahren zum Messen eines Aufpralls für eine Batterie, wobei das Verfahren umfasst:
Speichern (S1), durch eine Hauptsteuereinheit, MCU, (200) eines vorherigen Betriebsmodus eines Batteriesystems (1) in einem ersten Bereich (2001) eines Speichers (2000);
Speichern, durch die MCU, eines aktuellen Betriebsmodus des Batteriesystems (1) in einem zweiten Bereich (2002) des Speichers (2000);
Bestimmen (S2), durch die MCU, ob der in dem ersten Bereich (2001) gespeicherte vorherige Betriebsmodus und der in dem zweiten Bereich (2002) gespeicherte aktuelle Betriebsmodus zueinander gleich sind;
Speichern, durch die MCU, eines Änderungsflags in einem dritten Bereich (2003) des Speichers (2000) als einen ersten Wert, wenn bestimmt worden ist, dass der in dem ersten Bereich (2001) gespeicherte vorherige Betriebsmodus und der in dem zweiten Bereich (2002) gespeicherte aktuelle Betriebsmodus voneinander verschieden sind;
Empfangen, durch die MCU, eines Beschleunigungssensorsignals von einem Beschleunigungssensor (30), wenn der in dem zweiten Bereich (2002) gespeicherte aktuelle Betriebsmodus ein Ruhemodus ist und das Änderungsflag der erste Wert ist; und
Empfangen (S6), durch die MCU, des Beschleunigungssensorsignals von dem Beschleunigungssensor (30), wenn der in dem zweiten Bereich (2002) gespeicherte aktuelle Betriebsmodus nicht der Ruhemodus ist.

2. Verfahren nach Anspruch 1, ferner umfassend:
Bestimmen (S7), durch die MCU, ob ein durch das Beschleunigungssensorsignal angegebener Beschleunigungswert einen Referenzwert überschreitet; und
Hinzufügen (S8), durch die MCU, von 1 zu einer in einem vierten Bereich (2004) des Speichers (2000) gespeicherten Aufprallanzahl, wenn bestimmt worden ist, dass der Beschleunigungswert den Referenzwert überschreitet.

3. Verfahren nach Anspruch 1, ferner umfassend:
Bestimmen (S7), durch die MCU, ob der durch das Beschleunigungssensorsignal angegebene Beschleunigungswert den Referenzwert überschreitet;
Setzen, durch die MCU, des in dem dritten Bereich (2003) gespeicherten Änderungsflags auf einen zweiten Wert und Speichern des zweiten Werts in dem dritten Bereich (2003), wenn bestimmt worden ist, dass der Beschleunigungswert gleich wie oder kleiner als der Referenzwert ist; und
Speichern, durch die MCU, des in dem zweiten Bereich (2002) gespeicherten Betriebsmodus in dem ersten Bereich (2001) des Speichers (2000).

4. Verfahren nach Anspruch 2, ferner umfassend:
Bestimmen (S9), durch die MCU, ob die Aufprallanzahl einen bestimmten Aufprallschwellenwert erreicht, und
Durchführen (S10), durch die MCU, eines Schutzbetriebs für einen Aufprall, wenn bestimmt worden ist, dass die Aufprallanzahl den vorbestimmten Aufprallschwellenwert erreicht hat.

5. Verfahren nach Anspruch 4, ferner umfassend:
Setzen, durch die MCU, des in dem dritten Bereich (2003) gespeicherten Änderungsflags auf einen zweiten Wert und Speichern des zweiten Werts in dem dritten Bereich (2003), wenn bestimmt worden ist, dass die Aufprallanzahl den vorbestimmten Aufprallschwellenwert nicht erreicht hat; und
Speichern, durch die MCU, des in dem zweiten Bereich (2002) gespeicherten aktuellen Betriebsmodus in dem ersten Bereich (2001).

6. Batteriesystem (1) zum Messen eines Aufpralls für eine Batterie, wobei das Batteriesystem (1) umfasst:
einen Beschleunigungssensor (30), welcher dazu eingerichtet ist, durch ein Messen einer Beschleunigung des Batteriesystems (1) ein Beschleunigungssensorsignal zu erzeugen; und
eine Hauptsteuereinheit, MCU, (200), welche durchführt:
Vorspeichern eines Betriebsmodus eines Batteriesystems (1) in einem ersten Bereich (2001) eines Speichers (2000);
Speichern eines aktuellen Betriebsmodus in einem zweiten Bereich (2002) des Speichers (2000) und als ein Ergebnis eines Vergleichens des in dem ersten Bereich (2001) gespeicherten Betriebsmodus und des in dem zweiten Bereich (2002) gespeicherten aktuellen Betriebsmodus Speichern eines Änderungsflags in einem dritten Bereich (2003) des Speichers (2000) als einen ersten Wert, wenn der Betriebsmodus und der aktuelle Betriebsmodus voneinander verschieden sind; und
Empfangen des Beschleunigungssensorsignals von dem Beschleunigungssensor (30), wenn der in dem zweiten Bereich (2002) gespeicherte aktuelle Betriebsmodus ein Ruhemodus ist und das in dem dritten Bereich (2003) gespeicherte Änderungsflag der erste Wert ist oder der in dem zweiten Bereich (2002) gespeicherte aktuelle Betriebsmodus nicht der Ruhemodus ist.

7. Batteriesystem nach Anspruch 6, wobei die MCU den Speicher (2000) umfasst, welcher den ersten Bereich (2001), den zweiten Bereich (2002), den dritten Bereich (2003) und einen vierten Bereich (2004) umfasst, und
wobei die MCU in dem vierten Bereich (2004) eine Aufprallanzahl speichert, welche eine Häufigkeit angibt, mit welcher ein durch das Beschleunigungssensorsignal angegebener Beschleunigungswert einen Referenzwert überschreitet.

8. Batteriesystem nach Anspruch 7, wobei die MCU:
1 zu der Aufprallanzahl hinzufügt, wenn der durch das empfangene Beschleunigungssensorsignal angegebene Beschleunigungswert den Referenzwert überschreitet, und das in dem dritten Bereich (2003) gespeicherte Änderungsflag auf einen zweiten Wert setzt und den zweiten Wert in dem dritten Bereich (2003) speichert; und
den in dem zweiten Bereich (2002) gespeicherten aktuellen Betriebsmodus in dem ersten Bereich (2001) speichert, wenn der durch das empfangene Beschleunigungssensorsignal angegebene Beschleunigungswert gleich wie oder kleiner als der Referenzwert ist.

9. Batteriesystem nach Anspruch 7, wobei die MCU:
bestimmt, ob die Aufprallanzahl einen vorbestimmten Aufprallschwellenwert erreicht; und
einen Schutzbetrieb für einen Aufprall durchführt, wenn die Aufprallanzahl den vorbestimmten Aufprallschwellenwert erreicht.

10. Batteriesystem nach Anspruch 7, wobei die MCU:
das in dem dritten Bereich (2003) gespeicherte Änderungsflag auf einen zweiten Wert setzt und den zweiten Wert in dem dritten Bereich (2003) speichert, wenn die Aufprallanzahl einen vorbestimmten Aufprallschwellenwert nicht erreicht; und
den in dem zweiten Bereich (2002) gespeicherten aktuellen Betriebsmodus in dem ersten Bereich (2001) des Speichers (2000) speichert.

## Revendications

1. Procédé de mesure d'un impact pour une batterie, le procédé comprenant :
le stockage (S1), par une unité principale de commande MCU, (200), d'un mode de fonctionnement précédent d'un système de batterie (1) dans une première zone (2001) d'une mémoire (2000) ;
le stockage, par la MCU, d'un mode de fonctionnement actuel du système de batterie (1) dans une deuxième zone (2002) de la mémoire (2000) ;
la détermination (S2), par la MCU, si le mode de fonctionnement précédent stocké dans la première zone (2001) et le mode de fonctionnement actuel stocké dans la deuxième zone (2002) sont identiques l'un à l'autre ;
le stockage, par la MCU, d'un drapeau de changement dans une troisième zone (2003) de la mémoire (2000) en tant que première valeur lorsque le mode de fonctionnement précédent stocké dans la première zone (2001) et le mode de fonctionnement actuel stocké dans la deuxième zone (2002) sont déterminés comme étant différents l'un de l'autre ;
la réception, par la MCU, d'un signal de capteur d'accélération provenant d'un capteur d'accélération (30) lorsque le mode de fonctionnement actuel stocké dans la deuxième zone (2002) est un mode veille et que le drapeau de changement est la première valeur ; et
la réception (S6), par la MCU, du signal de capteur d'accélération provenant du capteur d'accélération (30) lorsque le mode de fonctionnement actuel stocké dans la deuxième zone (2002) n'est pas le mode veille.

2. Procédé selon la revendication 1, comprenant en outre :
la détermination (S7), par la MCU, si une valeur d'accélération indiquée par le signal de capteur d'accélération dépasse une valeur de référence ; et
l'ajout (S8), par la MCU, de 1 à un décompte d'impacts stocké dans une quatrième zone (2004) de la mémoire (2000) lorsqu'il est déterminé que la valeur d'accélération dépasse la valeur de référence.

3. Procédé selon la revendication 1, comprenant en outre :
la détermination (S7), par la MCU, si la valeur d'accélération indiquée par le signal de capteur d'accélération dépasse la valeur de référence ;
le passage, par la MCU, du drapeau de changement stocké dans la troisième zone (2003) à une seconde valeur et le stockage de la seconde valeur dans la troisième zone (2003) lorsqu'il est déterminé que la valeur d'accélération est inférieure ou égale à la valeur de référence ; et
le stockage, par la MCU, du mode de fonctionnement actuel stocké dans la deuxième zone (2002) dans la première zone (2001) de la mémoire (2000).

4. Procédé selon la revendication 2, comprenant en outre :
la détermination (S9), par la MCU, si le décompte d'impacts atteint un seuil d'impact prédéterminé ; et
la réalisation (S10), par la MCU, d'une opération de protection pour un impact lorsqu'il est déterminé que le décompte d'impacts a atteint le seuil d'impact prédéterminé.

5. Procédé selon la revendication 4, comprenant en outre :
le passage, par la MCU, du drapeau de changement stocké dans la troisième zone (2003) à une seconde valeur, et le stockage de la seconde valeur dans la troisième zone (2003) lorsqu'il est déterminé que le décompte d'impacts n'a pas atteint le seuil d'impact prédéterminé ; et
le stockage, par la MCU, du mode de fonctionnement actuel stocké dans la deuxième zone (2002) dans la première zone (2001).

6. Système de batterie (1) pour mesurer un impact pour une batterie, le système de batterie (1) comprenant :
un capteur d'accélération (30) configuré pour générer un signal de capteur d'accélération en mesurant une accélération du système de batterie (1) ; et
une unité principale de commande, MCU, (200) qui réalise :
le préstockage d'un mode de fonctionnement d'un système de batterie (1) dans une première zone (2001) d'une mémoire (2000) ;
le stockage d'un mode de fonctionnement actuel dans une deuxième zone (2002) de la mémoire (2000), et à la suite de la comparaison du mode de fonctionnement stocké dans la première zone (2001) et du mode de fonctionnement actuel stocké dans la deuxième zone (2002), le stockage d'un drapeau de changement dans une troisième zone (2003) de la mémoire (2000) en tant que première valeur lorsque le mode de fonctionnement et le mode de fonctionnement actuel sont différents l'un de l'autre ; et
la réception du signal de capteur d'accélération provenant du capteur d'accélération (30) lorsque le mode de fonctionnement actuel stocké dans la deuxième zone (2002) est un mode veille, et que le drapeau de changement stocké dans la troisième zone (2003) est la première valeur ou que le mode de fonctionnement actuel stocké dans la deuxième zone (2002) n'est pas le mode veille.

7. Système de batterie selon la revendication 6, dans lequel la MCU comprend la mémoire (2000) comprenant la première zone (2001), la deuxième zone (2002), la troisième zone (2003), et une quatrième zone (2004), et
dans lequel la MCU stocke un décompte d'impact dans la quatrième zone (2004) indiquant le nombre de fois où une valeur d'accélération indiquée par le signal de capteur d'accélération dépasse une valeur de référence.

8. Système de batterie selon la revendication 7, dans lequel la MCU :
ajoute 1 au décompte d'impacts lorsque la valeur d'accélération indiquée par le signal de capteur d'accélération reçu dépasse la valeur de référence, et passe le drapeau de changement stocké dans la troisième zone (2003) à une seconde valeur et stocke la seconde valeur dans la troisième zone (2003) ; et
enregistre le mode de fonctionnement actuel stocké dans la deuxième zone (2002) dans la première zone (2001) lorsque la valeur d'accélération indiquée par le signal de capteur d'accélération reçu est inférieure ou égale à la valeur de référence.

9. Système de batterie selon la revendication 7, dans lequel la MCU :
détermine si le décompte d'impacts atteint un seuil d'impacts prédéterminé ; et
réalise une opération de protection pour un impact lorsque le décompte d'impacts atteint le seuil d'impact prédéterminé.

10. Système de batterie selon la revendication 7, dans lequel la MCU :
passe le drapeau de changement stocké dans la troisième zone (2003) à une seconde valeur et stocke la seconde valeur dans la troisième zone (2003) lorsque le décompte d'impacts n'atteint pas un seuil d'impact prédéterminé ; et
stocke le mode de fonctionnement actuel stocké dans la deuxième zone (2002) dans la première zone (2001) de la mémoire (2000).
